# EUROPEAN PATENT APPLICATION

(11) **EP 4 835 272 A1**
(43) Date of publication of application: **04.11.2026**
(21) Application number: 26174562.4
(22) Date of filing: 24.04.2026
(51) Int. Cl.: F02B 41/10, F02D 9/06, F02D 41/00, F02M 26/34, F02M 26/43

(54) **INTERNAL COMBUSTION ENGINE COMPRISING AN AUXILIARY TURBINE CONFIGURATION**

(30) Priority: 28.04.2025 NL 2040263
(71) Applicant: DAF Trucks N.V., 5643 TW Eindhoven (NL)
(72) Inventor: KOTHAPALLI, Sravana Kumar, 5643 TW Eindhoven (NL)
(74) Representative: V.O.

(57) **Abstract**

An internal combustion engine (1000) comprising a turbocharger (700) with a main turbine (710). To to enhance energy recovery and control flexibility, the system comprises a first auxiliary turbine generator (510) arranged in a bypass path (220) that runs parallel to the main exhaust line (202). This auxiliary turbine is configured to extract energy from exhaust gas that is selectively routed away from the main turbine (710). A second auxiliary turbine generator (511) is arranged in the EGR line (303), and is configured to extract energy from the recirculated exhaust gas. The engine includes a plurality of flow control valves (600), including at least one exhaust divider valve (624) and at least one EGR divider valve (633), which allow the selective routing of exhaust gas and EGR gas through their respective auxiliary turbine generators. A control system (900) is provided, comprising a turbine engagement module (910). This module is configured to determine whether the engine is operating in a combustion mode or an engine braking mode, and to control the flow control valves accordingly.

## Description

An internal combustion engine comprising an auxiliary turbine configuration. More in particular the invention comprises an internal combustion engine comprising a main turbine, an auxiliary turbine comprised in an EGR line and an exhaust turbo comprised in an exhaust line, downstream the main turbine.

It is known to use a turbocharger comprising a turbine and compressor, where the turbine is positioned in the exhaust line downstream of the exhaust manifold, and the compressor is located in the intake line. In such systems, the turbine extracts energy from the exhaust gas to drive the compressor, thereby increasing the pressure and mass flow of intake air. Additionally, EGR systems are used to route a portion of the exhaust gas back to the intake to reduce emissions, often including a cooler to lower the temperature of the recirculated gas.

To improve energy efficiency, auxiliary turbines may be introduced to extract energy from exhaust gas paths that would otherwise be governed by bypass valves or EGR valves. For example, NL2026301B1 discloses an energy recovery system that includes a secondary turbine for use in certain flow conditions, including limited reference to engine braking. However, known systems do not provide a coordinated strategy for managing multiple turbine paths under varying engine modes, nor do they actively use turbine engagement to shape the pressure dynamics required for efficient engine braking.

In modern engine configurations, such as those comprising a turbocharger, one or more auxiliary turbine generators may be arranged in parallel bypass paths or in the EGR line. These turbine generators can be selectively engaged by means of flow control valves, including exhaust and EGR divider valves, to extract useful energy under different operating conditions. A control system may determine the current engine mode, such as combustion or engine braking, and adjust valve positions accordingly.

A key technical challenge arises when attempting to use such configurations to improve engine braking. In braking conditions, where fuel injection is disabled, it remains necessary to maintain a sufficiently high intake pressure relative to exhaust pressure to ensure mass flow into the cylinders. This flow is important for generating sufficient braking torque, yet it must be managed without relying on combustion. Additionally, the engagement of turbine generators in the exhaust and EGR paths affects upstream and downstream pressures, making it necessary to coordinate turbine load, flow routing, and pressure management as part of a unified control strategy. Enabling a robust and efficient engine braking function under these constraints remains an open problem in the field.

The invention aims to propose a solution that synergistically combines the positive effects of EGR and turbo-compound, such that an internal combustion engine is created with increased efficiency as well as reduced emission of NOx.

### Summary of the invention

The invention provides an internal combustion engine comprising a turbocharging and energy recovery system configured to operate under both combustion and engine braking conditions. The engine includes at least one exhaust manifold arranged to collect exhaust gas from one or more engine cylinders and direct it to an exhaust line. An EGR line is provided to recirculate part of the exhaust gas from the exhaust line to the intake line, in order to support emission control and thermal management.

The engine is equipped with a turbocharger located in the exhaust line and a compressor arranged in the intake line. The turbine is mechanically coupled to the compressor to provide pressurized intake air under suitable engine conditions.

To enhance energy recovery and control flexibility, the engine further comprises a first auxiliary turbine generator arranged in a bypass path that runs parallel to the main exhaust line. This auxiliary turbine is configured to extract energy from exhaust gas that is selectively routed away from the main turbine. A second auxiliary turbine generator is arranged in the EGR line, and is configured to extract energy from the recirculated exhaust gas.

The engine includes a plurality of flow control valves, including at least one exhaust divider valve and at least one EGR divider valve, which allow the selective routing of exhaust gas and EGR gas through their respective auxiliary turbine generators.

A control system is provided, comprising a turbine engagement module. This module is configured to determine whether the engine is operating in a combustion mode or an engine braking mode, and to control the flow control valves accordingly. In combustion mode, the system directs exhaust flow primarily through the main turbine to drive the compressor, while managing auxiliary turbine engagement to support cooled EGR flow without compromising propulsion efficiency. In engine braking mode, the control system engages the auxiliary turbines in the exhaust and EGR paths to support increase cylinder mass flow, and enable energy recovery, while maintaining flow direction through the engine.

The control system disclosed herein manages a multi-turbine turbocharger configuration with distinct strategies for combustion and engine braking operation. In combustion mode, the system aims to convert as much fuel energy as possible into mechanical propulsion. To support this, the control system increases the air mass flow into the engine using the main turbocharger, while optionally engaging the EGR turbine to increase cooled exhaust gas recirculation, provided that pressure balance is maintained. Exhaust flow is directed primarily through the main turbine to drive the intake compressor, while the exhaust bypass turbine is not engaged unless needed to adjust turbine load or balance pressure.

In engine braking mode, the objective shifts from propulsion to maximizing air mass flow through the engine in order to enhance braking torque and recover energy from the exhaust and EGR streams. The control system maintains the necessary intake pressure for air to enter the cylinders, even in the absence of combustion. To control the speed and load of the main turbocharger, the system may engage the exhaust bypass turbine to reduce the pressure drop across the main turbine, thereby reducing compressor output without physically bypassing the main turbine. If further unloading is needed-such as to avoid compressor overspeed or excessive intake pressure-the system may partially or fully bypass the auxiliary turbines using flow control valves. Simultaneously, the EGR turbine is actively engaged to reduce the temperature of recirculated exhaust gas, providing increasing cooling capacity and enabling higher EGR flow. The turbine engagement strategy in braking mode focuses on balancing load across the auxiliary turbines while maintaining a positive intake-to-exhaust pressure differential and maximizing braking torque. The system continuously adjusts valve positions and turbine loads based on sensor feedback related to pressure, temperature, turbine speed, and flow conditions.

Optionally, the at least one power turbine and/or the turbocharger turbine may be arranged for driving an electric generator and/or a mechanical transmission. The turbocharger and at least one power turbine may be coupled by a single shaft or mechanical transmission to form a combined turbine.

In another aspect of the invention, the EGR line may comprise an EGR cooler arranged downstream of the second auxiliary turbine arranged for dissipating heat from the exhaust gas in the EGR line to reduce the exhaust gas temperature before entering the intake line. The at least one power turbine may be arranged for expanding the exhaust gas to reduce the exhaust gas temperature upstream of the EGR cooler, such that the EGR cooler may dissipate less heat from the exhaust gas.

Optionally, first and second auxiliary power turbines may be arranged for driving an electric generator and/or a mechanical transmission.

The arrangement provides a pressure balanced turbine configuration that can be optimally engaged depending on an engine condition, specifically in combustion mode or in engine brake mode. The auxiliary turbines may aid to a fixed geometry turbine, i.e. a need for a variable turbine can be circumvented by the auxiliary turbines that balance an optimal working range.

### BRIEF DESCRIPTION OF THE DRAWINGS

The invention will be further elucidated in the figures:
Figure 1 shows a prior art configuration;
Figure 2 shows an improvement upon this prior art configuration;
Figure 3 shows a further schematic arrangement of control system 900 including a turbine engagement module 910;
Figure 4 shows an engine operation map used to divide the engine's torque-speed envelope in distinct zones;
Figure 5A, B shows engine operation modes in zone 1;
Figure 6 shows engine operation in zone 2;
Figure 7 shows engine operation in zone 3;
Figure 8 shows engine operation in zone 4;
Figure 9 shows engine operation in zone 5.

### DETAILED DESCRIPTION

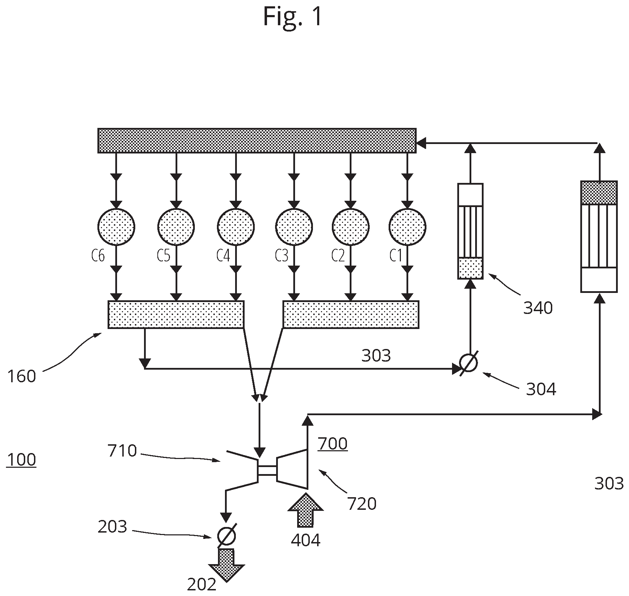

Turning to Figure 1 a prior art configuration is illustrated of an internal combustion engine 100 comprising at least one exhaust manifold 160 arranged to collect exhaust gas from a plurality of cylinders c1-c6 and deliver said exhaust gas to an exhaust line 202. A turbocharger 700 is arranged in the exhaust line 202 and comprises a variable-geometry turbine VGT turbine 710 and a compressor 720, wherein the turbine 710 is arranged to drive the compressor 720. The compressor 720 supplies pressurized intake air to an intake line 404 via a charge air cooler. The engine 100 further comprises an EGR line 303, which is arranged to recirculate a selected portion of the exhaust gas from the exhaust line 202 back to the intake line 404 through an EGR valve 304 and an EGR cooler 305. The EGR cooler 340 is positioned to reduce the temperature of the recirculated exhaust gas before it enters the intake line.

To manage exhaust and EGR flow, the system employs a number of actuators, including the VGT 710, the EGR valve 304, and a bypass valve BPV valve 203 located downstream of the turbine. These actuators are used to regulate air and EGR flows and ensure the engine operates within its performance and emission limits. Each of these valves, when actuated, creates a pressure differential across it. In the current configuration, the energy associated with these pressure drops is not recovered or utilized.

Therefore, the system does not extract energy from the pressure drop across the EGR valve 304 or BPV valve 203. During the engine brake mode BPV 203 is closed to operate the turbine within the speed limit for current engine configuration. This energy is wasted in current engines. In the new engine configuration, power can be generated from pressure drop across the BPV and store it in the battery. Cylinder mass flow can be increased to increase the engine braking power with more flow through the EGR path. This higher air flow through the EGR path will both increase braking power and generate power when channeled through the EGR turbine. EGR flow is limited by the EGR cooler power in the current configuration. In this new configuration turbine generator in the EGR path aids in reducing the flow temperatures before the EGR cooler and therefore allows for the higher flow through the EGR path.

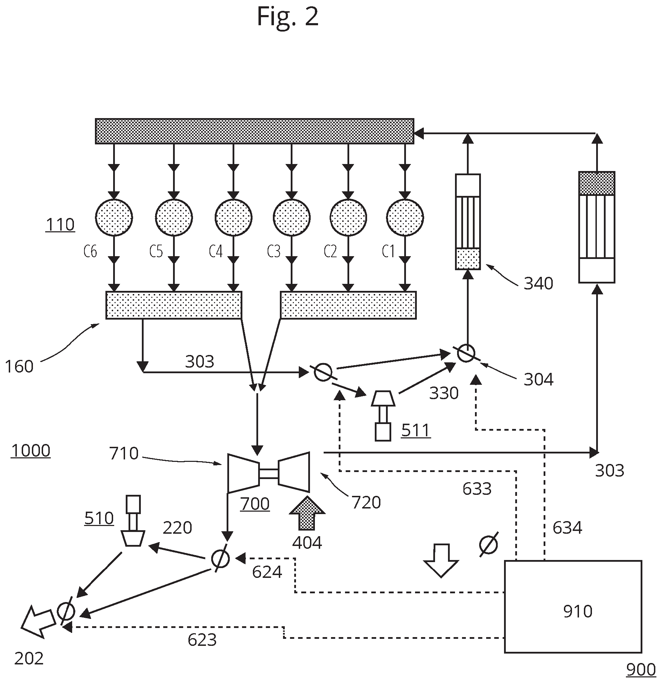

Figure 2 shows an improvement upon this prior art configuration by implementing one or more auxiliary turbine generators 510 in bypass paths 220, 330 parallel to the exhaust line 202 and/or the EGR line 303 as further developed in the subsequent figures. More in particular, Figure 2 illustrates a new turbocharger configuration for an internal combustion engine 1000 that improves upon the prior art arrangement 100 shown in Figure 1. These turbine generators 510, 511 are controlled by a control system 900 comprising a turbine engagement module 910, which is configured to determine whether the engine is operating in a combustion mode or an engine braking mode and to control flow control valves accordingly. The upgraded system would enable power to be generated from the delta pressure across the actuators by means of these small turbines, thus recovering energy currently lost and improving overall engine efficiency.

The configuration is designed to recover energy from pressure differentials across flow control elements that are traditionally wasted during engine operation, particularly during engine braking or EGR flow regulation. The engine 1000 similarly comprises at least one exhaust manifold 160, which collects exhaust gas from one or more cylinders 110 and delivers it to an exhaust line 202. A turbocharger 700 is arranged in the exhaust line 202 and comprises a turbine 710 and a compressor 720, wherein the turbine 710 is arranged to drive the compressor 720. The compressor is located in an intake line 404 and supplies compressed air to the engine cylinders. An EGR line 303 is connected between the exhaust line 202 and the intake line 404 and is arranged to recirculate part of the exhaust gas as EGR flow. The EGR line 303 includes an EGR cooler 340, which reduces the temperature of the recirculated exhaust gas before re-entry into the intake line. The new configuration includes at least one first auxiliary turbine generator 510, which is arranged in a bypass path 220 that runs parallel to the exhaust line 202. This first auxiliary turbine generator 510 is configured to extract energy from a portion of the exhaust gas diverted from the main exhaust line 202. It is positioned to replace the function of the traditional brake valve by converting the pressure drop during bypass events into usable energy, for example electrical or mechanical. In addition, the system includes at least one second auxiliary turbine generator 511 arranged in the EGR line 303. In this example the second auxiliary turbine generator 511 is located upstream of the EGR cooler 340 and is configured to extract energy from the recirculated exhaust gas. In this configuration, it replaces the EGR valve by enabling flow control while also recovering energy from the associated pressure drop and aids to cooling the EGR gases, up to a point that an EGR cooler may be designed with less cooling capacity or even be absent.

To control gas routing, the engine is equipped with a plurality of flow control valves. This includes at least one exhaust divider valve 624, configured to direct exhaust gas either to the main exhaust 202 or to the first auxiliary turbine generator 510, and at least one EGR divider valve 633, configured to direct EGR gas through or around the second auxiliary turbine generator 511. An additional divider valve 623 may be provided in the exhaust path 202 and a further additional valve 634 in the EGR path 303 in order to enable flexible operation across the entire engine range. For example a main part of the exhaust flow can be directed to exhaust turbine 510, effectively closing main exhaust line 202 at the junction of divider valve 624. Furthermore, by effectively closing the bypass flow by divider valve 623, additional braking power can be provided. Similarly, without using exhaust turbine 510 exhaust flow can be throttled by diversion of the flow into one of the main or bypass tracts 202 220, and subsequently closing said bypass tract by the downstream divider valve 623. Furthermore, a part of the EGR flow can be directed to EGR turbine 511 via bypass tract 330, by closing effectively main tract 303 of the EGR line. Furthermore, by effectively closing the bypass flow by divider valve 634, the EGR flow can be altogether throttled up to a point of complete shut off.

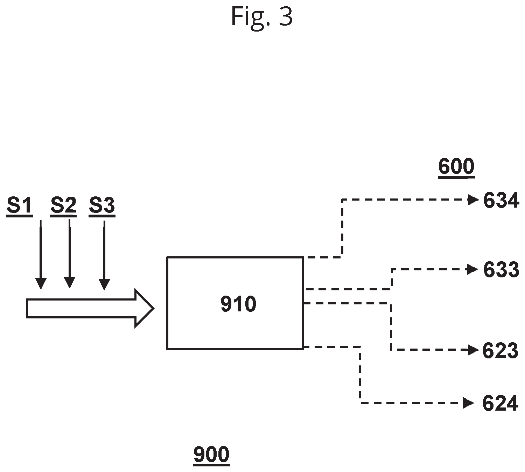

Figure 3 shows a further schematic arrangement of control system 900 including a turbine engagement module 910. The turbine engagement module 910 is configured to determine in a decision step S1 whether the engine is operating in a combustion mode or in an engine braking mode, and to control the flow control valves 600 accordingly. In combustion mode, the exhaust divider valve 624 diverts exhaust flow substantially away from the first auxiliary turbine generator 510 in order to limit flow therethrough. The EGR divider valve 633 selectively diverts EGR flow through the second auxiliary turbine generator 511 to create a selective pressure drop in accordance with specific engine conditions. In engine braking mode, the exhaust divider valve 624 diverts exhaust gas to the first auxiliary turbine generator 510 to reduce the pressure drop over the turbocharger turbine 700 and thereby modulate the compressor output to maintain a pressure differential such that the intake pressure exceeds the exhaust pressure. Since a part of the exhaust flow is preserved for converting into mechanical power by exhaust turbine 510, turbo charger 700 may be of a fixed geometry, since the air flow can be modulated by interplay of the upstream turbine 710, the downstream turbine 510, and the amount of EGR flow 303 that limits the amount of exhaust flow 202.

Calculations made based on the available test data show that, for the same EGR cooler power capacity, EGR flow can be increased by up to 23% which raises the total flow to the cylinders by up to 5.5% and, therefore, increases the engine brake power by up to 30 kW ( 8% higher) for the same engine configuration.

The turbine engagement module 910 is further configured to receive one or more input signals comprising a fuel injection state signal or a braking request signal, indicative of whether the engine is operating in combustion mode or engine braking mode. In some embodiments, the module receives intake and exhaust pressure signals in decision step S2, and controls the exhaust divider valve 624 and EGR divider valve 633 to modulate the compressor output and thereby maintain a positive intake-to-exhaust pressure gradient. The module may also receive turbine speed or electrical load signals in decision step S3 from the auxiliary turbine generators 510 and 530, and control the respective divider valves 624 and 633 to maximize flow through the turbine generators within physical constraints.

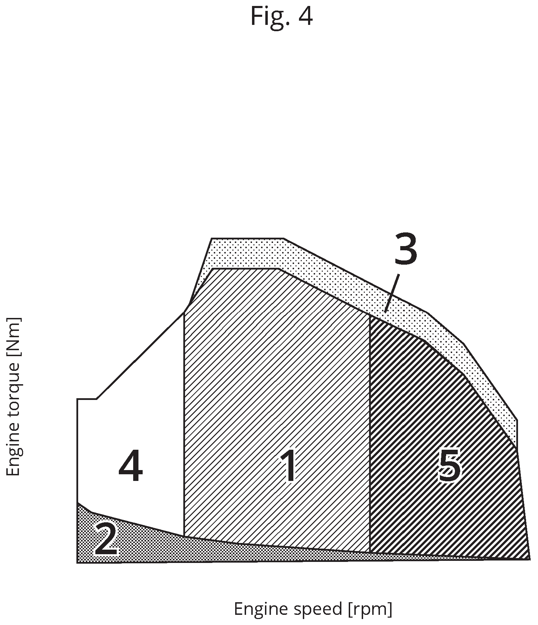

This configuration enables modular extension of different turbocharger layouts, allowing selection of different types of main turbochargers and auxiliary turbines for use in the exhaust and EGR paths while retaining the overall control architecture described above. The arrangement permits operation over the full engine load range and allows for meaningful energy recovery from gas flow regulation components that, in traditional designs, only serve a throttling function. Figure 4 shows an engine operation map used to divide the engine's torque-speed envelope into five distinct operating zones: zone 1-5. On the horizontal axis, engine speed varies between 0 and 3000 rpm; the torque is indicated in arbitrary units. These zones can be discerned to analyze and describe how the proposed turbocharger configuration behaves under various engine loads and operating conditions. Each zone corresponds to a characteristic combination of engine torque, speed, and thermal condition. Within these zones, the engine may operate in different modes, i.e. emissions and fuel efficiency modes, such as High NOx , Low NOx and Warm up Modes.

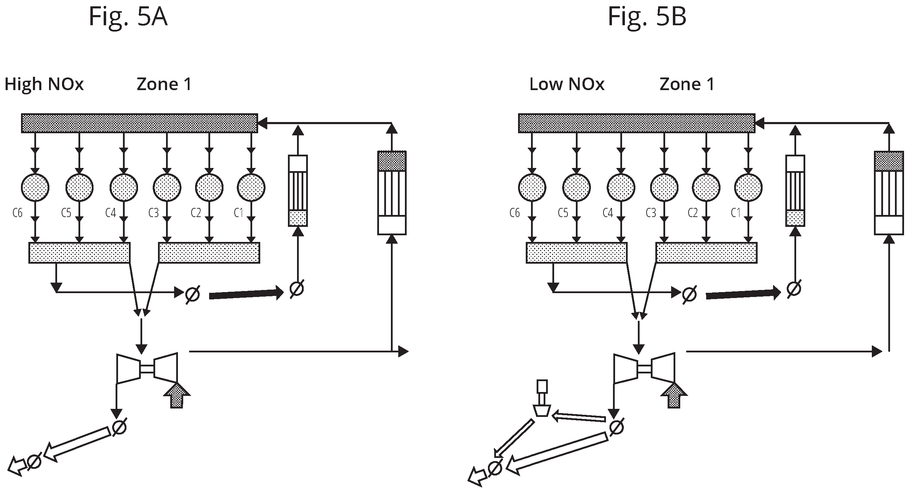

The operation of the invention in each zone is described with respect to the engine configuration shown in Figures 2 and 3, which includes a turbocharger 700, a first auxiliary turbine generator 510 in an exhaust bypass path 220, and a second auxiliary turbine generator 511 in the EGR line 303. Flow through these paths is controlled by divider valves 624, 623, 633, 634, which are operated by a control system 900 including a turbine engagement module 910. The schematic flow paths illustrated in Figures 5 through 9 show only the active flow routes under each operating condition, with arrow width representing approximate flow magnitude. Figure 5A shows engine operation modes in zone 1. In this region, the engine 1000 may operate in different engine modes where the configuration maintains high efficiency by directing exhaust gas through the main turbine 710 while avoiding the first auxiliary turbine generator 510 and the second auxiliary turbine generator 511. In an engine optimal efficiency High NOx mode exhaust divider valve 624 may positioned to allow substantially unrestricted flow through the main exhaust line 202, minimizing backpressure and allowing the fixed-geometry turbine 710 to generate the required intake boost with minimal throttling loss. The EGR divider valve 633 is configured to bypass the EGR turbine 511, reducing pressure drop across the EGR line 303 and preserving overall engine efficiency.

In engine Low Nox Modes (figure 5B) for example higher EGR flow is needed to achieve lower NOx output. The configuration responds by closing the downstream exhaust divider valve 623 to build backpressure, which increases the pressure differential across the engine and drives EGR flow. A portion of the exhaust may be diverted through the auxiliary turbine 510, converting this added pressure drop into mechanical or electrical power via a generator or mechanical transmission . Similarly, the EGR turbine 511 may be selectively engaged to support higher flow and recover energy while reducing EGR gas temperature upstream of the EGR cooler 340. This helps maintain sufficient cooling capacity under high EGR conditions.

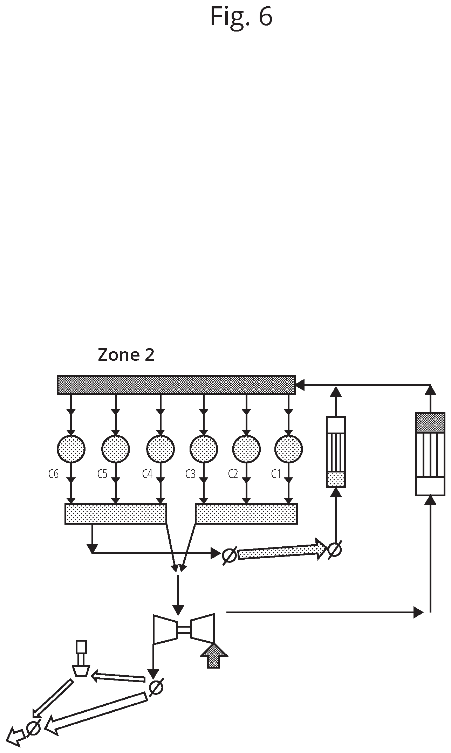

Figure 6 shows engine operation in zone 2, where the engine 1000 typically operates in keep-warm or warm-up conditions. In this zone 2, high exhaust temperatures are generated for aftertreatment efficiency. This can be achieved by inducing higher backpressure to reduce air mass flow and raise exhaust gas temperature. The control strategy of turbine engagement module 910 accordingly closes the bypass tract downstream of the auxiliary exhaust turbine 510 using divider valve 623, forcing flow through turbine 510 and recovering power from the induced pressure drop. This replaces the traditional function of a bypass valve, which in existing engines dissipates this pressure without energy recovery. The recovered energy can be stored or used to supply auxiliaries, including electrical heaters for emission system conditioning.

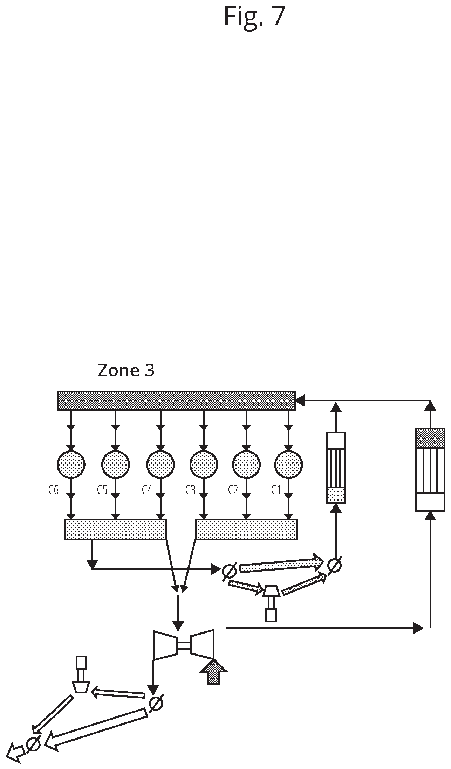

Figure 7 shows engine operation in zone 3, corresponding to typical engine mode operation at higher engine loads. At these speeds, the fixed-geometry turbine 710 may approach its rotational speed limit. To mitigate this, part of the exhaust flow is directed away from the turbine 710 to the auxiliary turbine 510 using divider valve 624, reducing turbine speed and maintaining flow stability. Although this increases overall backpressure, the energy lost is recovered by the turbine generator 510. Additionally, EGR flow may exceed requirements in this region. The EGR divider valve 633 is adjusted to route a portion of the EGR flow through turbine 511, reducing EGR flow and reclaiming pressure energy that would otherwise be lost. The EGR turbine 511 operates upstream of the EGR cooler 340 to assist in temperature reduction.

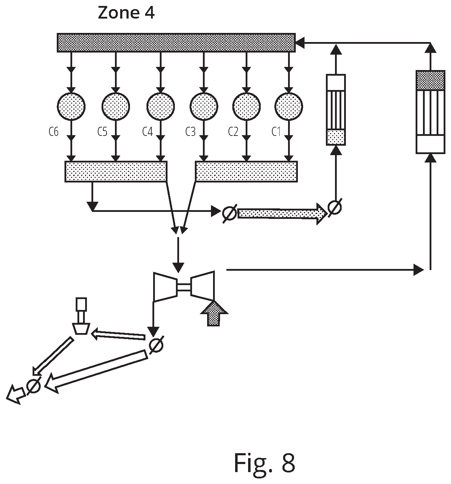

Figure 8 shows engine operation in zone 4, where it becomes challenging to maintain sufficient EGR flow due to lower exhaust pressure. In current engines, this is handled by closing the variable-geometry turbine to increase backpressure. In the new configuration, the exhaust flow is directed to the auxiliary turbine 510 by operating divider valve 624, while the downstream valve 623 may be closed to further enforce pressure buildup. The increased delta pressure across the engine promotes EGR delivery, and the turbine generator 510 recovers energy from this flow. The EGR turbine 511 may also be engaged to modulate pressure and reclaim energy from the EGR loop, especially under higher flow demand conditions.

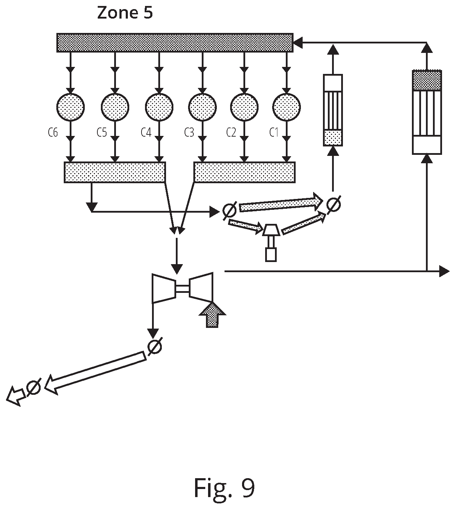

Figure 9 shows engine operation in zone 5, which represents high-speed, high-load conditions. In this region, the pressure drop across the engine is naturally elevated, and EGR flow typically exceeds what is needed for emissions control. In current configurations, the EGR valve is closed and the VGT is opened to suppress EGR. In the present setup, the engine operates under higher sustained delta pressure due to the fixed-geometry turbine 710. The EGR divider valve 633 is configured to direct excess EGR flow to the second auxiliary turbine generator 511. The downstream EGR divider valve 634 may be closed to force full flow through turbine 511, thereby recovering energy and lowering EGR gas temperature. This supports improved thermal performance of the EGR cooler 340 and reduces engine parasitic losses.

Throughout zones 1 to 5, the modular use of divider valves 624, 623, 633, and 634 allows selective routing of exhaust and EGR flows through bypass tracts or turbine paths. The combination of the turbocharger 700 with one or more turbine generators 510, 511 under control of the turbine engagement module 910 enables adaptive energy recovery and flow control. This architecture supports pressure management, cooling optimization, and electrical generation across a wide operating range without the inherent throttling losses associated with traditional valve-based control systems.

The proposed configuration enables precise and dynamic control of both intake air and EGR flows across all engine operating conditions, without incurring significant fuel consumption penalties. During engine warm-up and keep-warm phases, the divider valve 624 in the exhaust path is used to redirect exhaust gas through the auxiliary turbine generator 510, thereby increasing backpressure and reducing engine airflow. This strategy results in elevated exhaust gas temperatures due to reduced air dilution, which are beneficial for efficient NOx conversion in the aftertreatment system. Additionally, electrical or mechanical power generated by the turbine 510 may be used to further heat the exhaust flow, supporting sustained catalyst activity and emissions control. As a result, the engine can be operated in a manner that meets emissions targets during transient and cold phases with minimal impact on fuel efficiency.

Beyond thermal management, the configuration contributes to overall system reliability and cost-effectiveness. By replacing a complex variable-geometry turbocharger with a fixed-geometry alternative, the system eliminates moving vane assemblies and associated control mechanisms, resulting in a turbocharger that is more robust, less prone to mechanical failure, and easier to package. A fixed-geometry unit is also lighter and more cost-effective, making it attractive for commercial engine applications that prioritize durability and serviceability.

Fuel efficiency improvements are achieved by utilizing energy that would otherwise be lost in traditional flow control elements. EGR flow, necessary to meet emissions requirements, is regulated by turbine engagement module 910 through divider valves in either the EGR line or the exhaust path. When this flow is routed through the auxiliary turbine generators, pressure energy is converted into usable power, which may be applied to operate auxiliary systems and reduce engine parasitic load. Additionally, the higher peak efficiency of a properly sized fixed-geometry turbine improves fuel consumption during steady-state operation, particularly at road load points. Together, these strategies support a more efficient and robust engine platform with improved emissions performance and reduced operational costs.

The energy extracted by the additional power turbine 510, 511 may e.g. be used to drive an electric generator directly or by means of a mechanical transmission. The generated electrical power may be used to increase the power of the internal combustion engine 1000 (e.g. in case of a hybrid engine) or to power other electrical components in the vehicle driven by the internal combustion engine 1000 (e.g. an air conditioning or heating system, or electric motors).

Alternatively by means of a mechanical transmission, the energy extracted by the additional power turbine 510, 511 may e.g. be used to mechanically drive the internal combustion engine 1000 or parts thereof, or other components in the vehicle driven by the internal combustion engine 1000 (e.g. a pump).

## Claims

1. An internal combustion engine (1000) comprising:
- at least one exhaust manifold (160), arranged for collecting exhaust gas from at least one cylinder (110) of the internal combustion engine (1000) and delivering said exhaust gas to an exhaust line (202);
- an EGR line (303), arranged for recirculating an EGR flow as a selected part of the exhaust gas flowing through the exhaust line (202) to an intake line (404);
- a turbocharger (700) arranged in the exhaust line (202) and a compressor (720) arranged in the intake line (404), the turbine (710) being arranged to drive the compressor (720);
- at least one first auxiliary turbine generator (510), arranged in a bypass path (220) parallel to the exhaust line (202), and configured to extract energy from a portion of the exhaust gas diverted from the exhaust line (202);
- at least one second auxiliary turbine generator (511), arranged in the EGR line (303), and configured to extract energy from the recirculated exhaust gas;
- a plurality of flow control valves (600), comprising at least one exhaust divider valve (624) and at least one EGR divider valve (633), configured to selectively route exhaust gas and EGR gas through the respective auxiliary turbine generators (510, 511);
- a control system (900), comprising a turbine engagement module (910) configured to determine whether the engine (1000) is operating in a combustion mode or an engine braking mode, and to control the flow control valves (600) accordingly,
wherein, in the combustion mode:
- exhaust divider valve (624) selectively diverts exhaust flow away from said first auxiliary turbine generator (510) in order to limit flow therethrough;
- EGR divider valve (633) selectively diverts EGR flow to said second auxiliary turbine generator (511) to create a selective pressure drop over said second auxiliary turbine in accordance with a specific engine condition;
and wherein, in the engine braking mode:
- exhaust divider valve (624) selectively diverts exhaust flow to said first auxiliary turbine generator (510) to reduce a pressure drop over the turbocharger turbine (710) and thereby modulating the compressor output to maintain a pressure differential such that intake pressure exceeds exhaust pressure;
- EGR divider valve (633) substantially maximally diverts EGR flow to said second auxiliary turbine generator (511) to reduce EGR gas temperature.

2. The internal combustion engine (1000) according to claim 1, wherein the turbine engagement module (910) is configured to receive input signals S1 comprising a fuel injection state signal, and/or a braking request signal, indicative of whether the engine (1000) is operating in combustion mode or engine braking mode.

3. The internal combustion engine (1000) according to any preceding claim, wherein the turbine engagement module (910) is configured to receive an intake pressure signal and an exhaust pressure signal, indicative of the pressure conditions S2 in the intake line (404) and exhaust line (202), respectively, and thereby controlling said exhaust divider valve (601) to further configure to modulate the compressor output to maintain a pressure differential such that intake pressure exceeds exhaust pressure.

4. The internal combustion engine (1000) according to any preceding claim, wherein the turbine engagement module (910) is configured to receive at least one turbine speed or electrical load signal from the first and/or second auxiliary turbine generators (510, 530) in order to control said divider valves (601, 602) to maximize a flow through said turbine generators based on physical constraints S3.

5. Internal combustion engine (1000) according to any preceding claim, whereas first or second auxiliary turbine (510, 511) are arranged for driving an electric generator and/or a mechanical transmission.

6. The internal combustion engine (1000) according to any preceding claim, wherein the turbocharger (700) and at least one first auxiliary turbine generator (510) are coupled by a mechanical transmission to form a combined turbine system.

7. The internal combustion engine (1000) according to any preceding claim, wherein the EGR line (303) comprises an EGR cooler (340) arranged for dissipating heat from the recirculated exhaust gas to reduce its temperature before entering the intake line (404).

8. The internal combustion engine (1000) according to claim 7, wherein the second auxiliary turbine generator (511) is arranged to expand the EGR flow and reduce its temperature upstream of the EGR cooler (340), such that the EGR cooler (340) dissipates heat at peak thermal efficiency.

9. The internal combustion engine (1000) according to any preceding claim, wherein the first auxiliary turbine generator (510) is equipped with a bypass tract, and the exhaust divider valve (624) is configured to selectively divert exhaust flow between the first auxiliary turbine generator (510) and the bypass tract.

10. The internal combustion engine (1000) according to claim 9, wherein a further exhaust divider valve (623) is provided downstream of the bypass tract.

11. The internal combustion engine (1000) according to any preceding claim, wherein the second auxiliary turbine generator (511) is equipped with a bypass tract, and the EGR divider valve (633) is configured to selectively divert EGR flow between the second auxiliary turbine generator (511) and the bypass tract.

12. The internal combustion engine (1000) according to claim 11, wherein a further EGR divider valve (634) is provided downstream of the bypass tract.
